(19) Europäisches Patentamt
European Patent Office
Office européen des brevets

(11) **EP 4 513 251 A1**

(12) **EUROPEAN PATENT APPLICATION**
published in accordance with Art. 153(4) EPC

(43) Date of publication:
**26.02.2025 Bulletin 2025/09**

(21) Application number: **23806570.0**

(22) Date of filing: **09.03.2023**

(51) International Patent Classification (IPC):
***G02B 27/01*** (2006.01)

(52) Cooperative Patent Classification (CPC):
**G02B 27/01; G02C 11/00; H02S 40/30**

(86) International application number:
**PCT/CN2023/080534**

(87) International publication number:
**WO 2023/221610 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.05.2022 CN 202210554304**

(71) Applicant: **Hisilicon (Shanghai) Technologies Co.,
Limited
Shanghai 201721 (CN)**

(72) Inventors:
• **LUO, Kun
Shenzhen, Guangdong 518129 (CN)**
• **JIANG, Congbiao
Shenzhen, Guangdong 518129 (CN)**
• **ZHANG, Cuiping
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **AR GLASSES AND AR GLASSES SYSTEM**

(57) This application relates to the field of AR technologies, and in particular, to AR glasses and an AR glasses system. The AR glasses further include an optical receiver/transmitter, a light propagation medium, a power supply apparatus, and a photovoltaic apparatus. The optical receiver/transmitter is configured to emit light. The optical receiver/transmitter is disposed on a frame. The light propagation medium is configured to guide propagation of the light emitted by the optical receiver/transmitter, and the light propagation medium is disposed on an eyeglass. The power supply apparatus is configured to provide electric energy for the AR glasses. The photovoltaic apparatus is configured to absorb light that does not enter the light propagation medium, and convert light energy into electric energy. The photovoltaic apparatus is electrically connected to the power supply apparatus, and the electric energy generated by the photovoltaic apparatus is transmitted to the power supply apparatus. The photovoltaic apparatus is disposed to recycle light that cannot be used for display, convert the light into electric energy, and feed back the electric energy to the AR glasses, to increase standby time of the AR glasses.

FIG. 1

## Description

This application claims priority to Chinese Patent Application No. 202210554304.7, filed with the China National Intellectual Property Administration on May 19, 2022 and entitled "AR GLASSES AND AR GLASSES SYSTEM", which is incorporated herein by reference in its entirety.

## TECHNICAL FIELD

This application relates to the field of AR technologies, and in particular, to AR glasses and an AR glasses system.

## BACKGROUND

An augmented reality (Augmented Reality, AR) technology is to superimpose a virtual object generated by a computer onto a real-world scenario, to augment the real world. In other words, in the AR technology, the real-world scenario needs to be collected, and then a virtual environment is added to the real world. The AR technology has broad application, mainly involving the medical care field, the education field, the military field, the industrial field, the entertainment and game field, and another field, and widely uses a plurality of technical means such as a multimedia means, a three-dimensional modeling means, a real-time tracking and registration means, an intelligent interaction means, and a sensing means, to simulate virtual information such as a text, an image, a three-dimensional model, music, and a video that are generated by the computer, and then apply simulated information to the real world. Two types of information complement each other, to "augment" the real world.

As a wearable electronic product, AR glasses have requirements for a small weight, wearing comfort, long standby time, and long-time use. Usually, a cell capacity is increased to increase standby time. Consequently, a weight of the glasses is increased, and comfort of a user is affected.

## SUMMARY

This application provides AR glasses and an AR glasses system, to increase standby time of the AR glasses.

This application provides AR glasses, including a frame and an eyeglass. The eyeglass is disposed on the frame. The AR glasses further include:

an optical receiver/transmitter, configured to emit light, where the optical receiver/transmitter is disposed on the frame;

a light propagation medium, configured to guide propagation of the light emitted by the optical receiver/transmitter;

a power supply apparatus, configured to provide electric energy for the AR glasses; and

a photovoltaic apparatus, configured to absorb light that does not enter the light propagation medium, and convert light energy into electric energy, where the photovoltaic apparatus is electrically connected to the power supply apparatus, and the electric energy generated by the photovoltaic apparatus is transmitted to the power supply apparatus.

In this application, the optical receiver/transmitter can emit the light towards the light propagation medium, so that the light enters the light propagation medium, and the light propagation medium guides the light to be propagated to human eyes. When the optical receiver/transmitter emits the light towards the light propagation medium, a part of the light does not enter the light propagation medium and cannot be used for display. The part of the light can irradiate the photovoltaic apparatus. The photovoltaic apparatus converts a part of light energy into electric energy. The photovoltaic apparatus is electrically connected to the power supply apparatus through a wire, to transmit the electric energy converted by the photovoltaic apparatus to the power supply apparatus, and provide the electric energy for the AR glasses. In this embodiment, the photovoltaic apparatus is disposed to recycle the light that cannot be used for display, convert the light into the electric energy, and feed back the electric energy to the AR glasses, to increase standby time of the AR glasses.

In a possible design, the optical propagation medium includes an in-coupling grating and an optical waveguide. The in-coupling grating is disposed between the optical receiver/transmitter and the optical waveguide. The in-coupling grating is configured to change a direction of light, to enable the light to enter the optical waveguide.

The photovoltaic apparatus can convert light energy that passes through the in-coupling grating and that does not enter the optical waveguide into electric energy.

In this application, the in-coupling grating can change a direction of the light emitted by the optical receiver/transmitter, so that the light can enter the optical waveguide. The optical waveguide guides the light to be propagated in the optical waveguide, and propagated to an out-coupling grating. The out-coupling grating changes a direction of the light again, to transmit the light to the human eyes. Due to a diffraction effect of the light, a part of the light directly passes through the in-coupling grating and cannot enter the optical waveguide. The part of the light can be absorbed by the photovoltaic apparatus, and the photovoltaic apparatus converts the part of the light into electric energy.

In a possible design, the photovoltaic apparatus and the in-coupling grating are disposed oppositely.

In this application, the photovoltaic apparatus is placed opposite to the in-coupling grating. The light passing through the in-coupling grating directly irradiates a surface of the photovoltaic apparatus, so that the photovoltaic apparatus absorbs the light, generates the electric energy, and reuses the wasted light. In this application, the light passing through the in-coupling grating is not reflected to the optical waveguide again, and the part of the light can be converted into the electric energy for reuse.

In a possible design, the photovoltaic apparatus includes one or more of a silicon solar cell, an organic solar cell, a perovskite solar cell, a quantum dot solar cell, a cell obtained by connecting an organic solar cell and a silicon solar cell in series, a cell obtained by connecting a perovskite solar cell and a silicon solar cell in series, and a cell obtained by connecting a quantum dot solar cell and a silicon solar cell in series.

In a possible design, the optical receiver/transmitter includes a lens and a light emitting screen. The lens can converge light emitted by the light emitting screen to the light propagation medium.

The photovoltaic apparatus can convert light energy that is not converged and emitted by the lens into electric energy.

In this application, the light emitting screen can emit the light. A plurality of lenses are disposed. The light is converged by the plurality of lenses and emitted towards a direction of the in-coupling grating. Because a part of the light cannot be collected by the lens, the part can be absorbed by the photovoltaic apparatus. The photovoltaic apparatus converts the part of the light into electric energy, to reduce a light loss of the optical receiver/transmitter.

In a possible design, the photovoltaic apparatus is disposed around a periphery of the light emitting screen and a periphery of the lens.

In this application, light emitted to an outer side of the lens or light that is refracted by the lens and extends around the lens can be absorbed by the photovoltaic apparatus.

In a possible design, the optical receiver/transmitter further includes a housing. The light emitting screen and the lens are disposed inside the housing, and the photovoltaic apparatus is disposed outside the housing.

The housing is made of a transparent material, and light can enter the photovoltaic apparatus through the housing.

In this application, the transparent material is disposed around the housing. The housing is made of a highly transparent material, so that light that is not collected by the lens can pass through the housing and can irradiate the photovoltaic apparatus. The photovoltaic apparatus absorbs a part of the light and converts the light into electric energy, to implement energy recycling.

The material of the housing may be transparent plastic.

In a possible design, the photovoltaic apparatus is a flexible solar cell.

In a possible design, the flexible solar cell includes one or more of an organic solar cell, a quantum dot solar cell, a perovskite solar cell, a cell obtained by connecting an organic solar cell and a quantum solar cell in series, a cell obtained by connecting an organic solar cell and a perovskite solar cell in series, and a cell obtained by connecting a quantum dot solar cell and a perovskite solar cell in series.

This application further provides an AR glasses system. The AR glasses system includes the foregoing AR glasses.

It should be understood that the foregoing general descriptions and the following detailed descriptions are merely examples, and are not intended to limit this application.

## BRIEF DESCRIPTION OF DRAWINGS

FIG. 1 is a schematic diagram of a structure of AR glasses according to an embodiment of this application;

FIG. 2 is a schematic diagram of a structure of AR glasses according to an embodiment of this application;

FIG. 3 is a schematic sectional view of an optical receiver/transmitter according to an embodiment of this application; and

FIG. 4 is a schematic sectional view of an optical receiver/transmitter from another angle of view according to an embodiment of this application.

Reference numerals:

1-AR glasses; 11-Optical receiver/transmitter; 111-Lens; 112-Light emitting screen; 113-Housing; 12-Light propagation medium; 121-In-coupling grating; 122-Optical waveguide; 123-Out-coupling grating; 13-Photovoltaic apparatus; and 14-Wire.

The accompanying drawings herein are incorporated into the specification and constitute a part of the specification, show embodiments conforming to this application, and are used together with the specification to explain a principle of this application.

**DESCRIPTION OF EMBODIMENTS**

To better understand the technical solutions of this application, the following describes embodiments of this application in detail with reference to the accompanying drawings.

The terms used in embodiments of this application are merely for the purpose of describing specific embodiments, and are not intended to limit this application. The terms "a", "said", and "the" of singular forms used in embodiments and the appended claims of this application are also intended to include plural forms, unless otherwise specified in the context clearly.

It should be understood that the term "and/or" used in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that orientation words such as "above", "below", "left", and "right" described in embodiments of this application are described from perspectives shown in the accompanying drawings, and should not be construed as a limitation on embodiments of this application. Moreover, in the context, it should be further understood that, when it is mentioned that one element is connected "above" or "below" another element, the element can be directly connected "above" or "below" the another element, or may be indirectly connected "above" or "below" the another element via an intermediate element.

Augmented reality glasses (Augmented reality Glasses) are considered as a display technology that replaces a mobile phone. A solution of a high-luminance, small-sized, and long-service-life micro LED optical receiver/transmitter and a diffractive optical waveguide combiner is an implementation of the AR glasses. When the micro LED optical receiver/transmitter and the diffractive optical waveguide combiner are used, utilization of light emitted by the micro LED is very low. First, because of a size of the optical receiver/transmitter, about 30% of the light emitted by the micro LED may be collected and emitted from the optical receiver/transmitter. The light emitted by the optical receiver/transmitter enters an optical waveguide from an in-coupling grating and is propagated to human eyes. Due to a diffraction effect of the light, more than 50% of the light passes through the in-coupling grating and cannot enter the optical waveguide. The part of the light cannot be used for display, and consequently is wasted. In addition, the part of the light may be reflected to the in-coupling grating, and enter the optical waveguide again. Consequently, interference to the light emitted from the optical receiver/transmitter is caused. To resolve a problem that the light is reflected and enters the optical waveguide again, a black thin film is usually placed at a side opposite to the in-coupling grating, so that the light that passes through the in-coupling grating and that does not enter the optical waveguide is absorbed via the black thin film. However, most of the light cannot be used for display, and consequently is wasted.

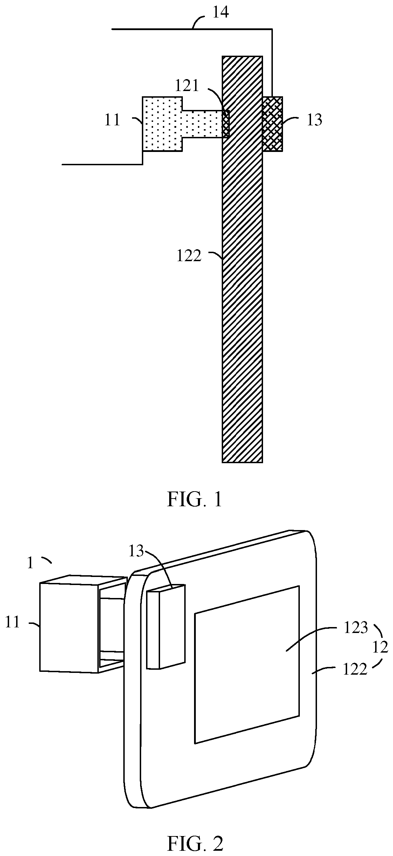

To resolve the foregoing technical problems, an embodiment provides AR glasses 1, including a frame and one or two eyeglasses. The eyeglass is disposed on the frame. As shown in FIG. 1 to FIG. 4, the AR glasses 1 further include an optical receiver/transmitter 11, a light propagation medium 12, a power supply apparatus, and a photovoltaic apparatus 13. The optical receiver/transmitter 11 is configured to emit light. The optical receiver/transmitter 11 is disposed on the frame. The light propagation medium 12 is configured to guide propagation of the light emitted by the optical receiver/transmitter 11, and the light propagation medium 12 is disposed on the eyeglass. The power supply apparatus is configured to provide electric energy for the AR glasses 1. The photovoltaic apparatus 13 is configured to absorb light that does not enter the light propagation medium 12, and convert light energy into electric energy. The photovoltaic apparatus 13 is electrically connected to the power supply apparatus, and the electric energy generated by the photovoltaic apparatus 13 is transmitted to the power supply apparatus.

In this embodiment, the optical receiver/transmitter 11 can emit the light towards the light propagation medium 12, so that the light enters the light propagation medium 12, and the light propagation medium 12 guides the light to be propagated to human eyes. When the optical receiver/transmitter 11 emits the light towards the light propagation medium 12, a part of the light does not enter the light propagation medium 12 and cannot be used for display. The part of the light can irradiate the photovoltaic apparatus 13. The photovoltaic apparatus 13 converts a part of light energy into electric energy. The photovoltaic apparatus 13 is electrically connected to the power supply apparatus through a wire 14, to transmit the electric energy converted by the photovoltaic apparatus 13 to the power supply apparatus, and provide the electric energy for the AR glasses 1. In this embodiment, the photovoltaic apparatus 13 is disposed to recycle the light that cannot be used for display, convert the light into the electric energy, and feed back the electric energy to the AR glasses 1, to increase standby time of the AR glasses 1.

As shown in FIG. 1 and FIG. 2, in a possible design, the light propagation medium 12 includes an in-coupling grating 121, an optical waveguide 122, and an out-coupling grating 123. The in-coupling grating 121 is disposed between the optical receiver/transmitter 11 and the optical waveguide 122. The in-coupling grating 121 is configured to change a direction of light, to enable the light to enter the optical waveguide 122. The photovoltaic apparatus 13 can convert light energy of light that passes through the in-coupling grating 121 and that does not enter the optical waveguide 122 into electric energy.

In this embodiment, the in-coupling grating 121 can change a direction of the light emitted by the optical receiver/transmitter 11, so that the light can enter the optical waveguide 122. The optical waveguide 122 guides the light to be propagated in the optical waveguide 122, and propagated to the out-coupling grating 123. The out-coupling grating 123 changes a direction of the light again, to transmit the light to the human eyes. Due to a diffraction effect of the light, a part of the light directly passes through the in-coupling grating 121 and cannot enter the optical waveguide 122. The part of the light can be absorbed by the photovoltaic apparatus 13, and the photovoltaic apparatus 13 converts the part of the light into electric energy.

Specifically, as shown in FIG. 1 and FIG. 2, the photovoltaic apparatus 13 and the in-coupling grating 121 are disposed oppositely. In other words, the photovoltaic apparatus 13 is placed opposite to the in-coupling grating 121. The light passing through the in-coupling grating 121 directly irradiates a surface of the photovoltaic apparatus 13, so that the photovoltaic apparatus 13 absorbs the light, generates the electric energy, and reuses the wasted light. In this embodiment, a black thin film is replaced with the photovoltaic apparatus 13, so that the light that passes through the in-coupling grating 121 is not reflected to the optical waveguide 122 again, and the part of the light can be converted into the electric energy for reuse.

The photovoltaic apparatus 13 is a solar cell, and the solar cell may be one or more of a silicon solar cell, an organic solar cell, a perovskite solar cell, a quantum dot solar cell, a cell obtained by connecting an organic solar cell and a silicon solar cell in series, a cell obtained by connecting a perovskite solar cell and a silicon solar cell in series, and a cell obtained by connecting a quantum dot solar cell and a silicon solar cell in series.

In this embodiment, the optical receiver/transmitter 11 is a micro LED optical receiver/transmitter 11. A micro LED display technology is a display technology in which self-luminous LEDs at a micrometer level are used as light emitting pixel units, and the light emitting pixel units are assembled on a drive panel to form a high-density LED array. Due to features such as a small size, a high integration level, and self-luminance, and the like of the micro LED chip, from a display perspective, the micro LED chip has greater advantages than an LCD and an OLED in terms of brightness, resolution, contrast, power consumption, a service life, a response speed, thermal stability, and the like.

In this embodiment, a light energy recycling process is described in the following.

A voltage is applied to the micro LED, and the LED emits light. In this case, light emitting efficiency of the LED is represented as WPE, namely, a proportion of light energy emitted by the LED to input electric energy.

The optical receiver/transmitter 11 receives the light emitted by the LED, and emits the light. Light receiving efficiency of the optical receiver/transmitter 11 is $\eta$light. In other words, a proportion of light entering the in-coupling grating 121 is $\eta$light.

After the light reaches the in-coupling grating 121, $\eta$Tr of the light passing through the in-coupling grating 121 does not enter the optical waveguide, and consequently is not used.

The light passing through the in-coupling grating 121 is absorbed by the photovoltaic apparatus 13, and then is converted into electric energy. Conversion efficiency is PCE.

Therefore, a whole process in which the recycled and reused light is converted into the electric energy may be expressed as:

$$EF=WPE\times\eta light\times\eta Tr\times PCE.$$

A proportion (TT) by which the standby time of the AR glasses 1 is increased may be expressed as:

$$TT=EF/WPE=\eta light\times\eta Tr\times PCE.$$

Therefore, it can be estimated that, if the light receiving efficiency of the optical receiver/transmitter 11 is 35%, transmittance of the in-coupling grating 121 is 50%, and photoelectric conversion efficiency of the photovoltaic apparatus 13 is 30%, the standby time of the AR glasses 1 can be increased by about 25 minutes on the basis of standard 8-hour standby time.

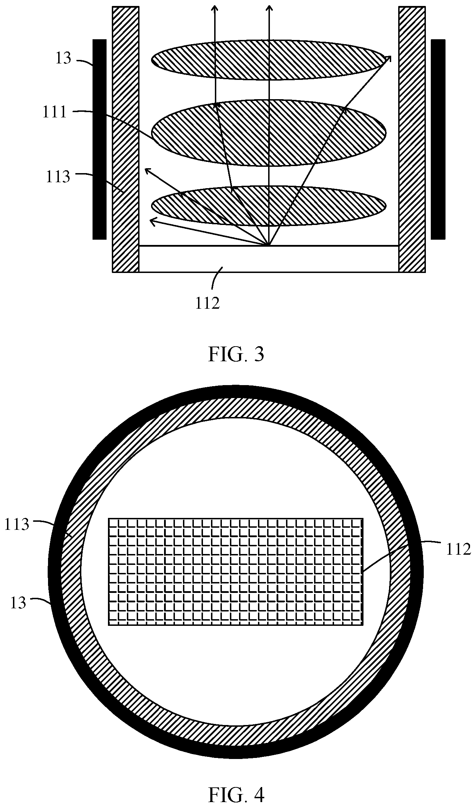

As shown in FIG. 3 and FIG. 4, in another possible design, the optical receiver/transmitter 11 includes a lens 111 and a light emitting screen 112. The lens 111 can converge light emitted by the light emitting screen 112 to the light propagation medium 12. The photovoltaic apparatus 13 can convert light energy that is not converged and emitted by the lens 111 into electric energy.

In this embodiment, the light emitting screen 112 can emit the light. A plurality of lenses 111 are disposed. The light is converged by the plurality of lenses 111 and emitted towards a direction of the in-coupling grating 121. Because a part of the light cannot be collected by the lens 111, the part can be absorbed by the photovoltaic apparatus 13. The photovoltaic apparatus 13 converts the part of the light into electric energy, to reduce a light loss of the optical receiver/transmitter 11.

Further, as shown in FIG. 3 and FIG. 4, the photovoltaic apparatus 13 is disposed around a periphery of the light emitting screen 112 and a periphery of the lens 111, so that light emitted to an outer side of the lens 111 or light that is refracted by the lens 111 and extends around the lens 111 can be absorbed by the photovoltaic apparatus 13.

Specifically, as shown in FIG. 3 and FIG. 4, the optical receiver/transmitter 11 further includes a housing 113. The light emitting screen 112 and the lens 111 are disposed inside the housing 113, and the photovoltaic apparatus 13 is disposed outside the housing 113. The housing 113 is made of a transparent material, and light can enter the photovoltaic apparatus 13 through the housing 113. In this embodiment, the transparent material is disposed around the housing 113. The housing 113 is made of a highly transparent material, so that light that is not collected by the lens 111 can pass through the housing 113 and can irradiate the photovoltaic apparatus 13. The photovoltaic apparatus 13 absorbs a part of the light and converts the light into electric energy, to implement energy recycling.

The material of the housing 113 may be transparent plastic.

The photovoltaic apparatus 13 is a flexible solar cell. The flexible solar cell may be one or more of an organic solar cell, a quantum dot solar cell, a perovskite solar cell, a cell obtained by connecting an organic solar cell and a quantum solar cell in series, a cell obtained by connecting an organic solar cell and a perovskite solar cell in series, and a cell obtained by connecting a quantum dot solar cell and a perovskite solar cell in series.

The light that passes through the in-coupling grating 121 and that does not enter the optical waveguide 122 and the light that is not collected by the lens 111 and that is in the optical receiver/transmitter 11 are recycled and reused. This further increases the standby time of the AR glasses 1. That the two parts of recycled light are combined, and the recycled light energy is converted into electric energy may be expressed as:

$$FF = WPE \times \eta light \times \eta Tr \times PCE + WPE \times (1 - \eta light) \times PCE.$$

A proportion (TT) by which the standby time of the AR glasses 1 is increased may be expressed as:

$$TT = EF/WPE = \eta light \times \eta Tr \times PCE + (1 - \eta light) \times PCE.$$

Therefore, it can be estimated that, if the light receiving efficiency of the optical receiver/transmitter 11 is 35%, the transmittance of the in-coupling grating 121 is 50%, and the photoelectric conversion efficiency of the photovoltaic apparatus 13 is 30%, the standby time of the AR glasses 1 can be increased by about 2 hours on the basis of the standard 8-hour standby time. The increase proportion is about 25%.

An embodiment further provides an AR glasses system. The AR glasses system includes AR glasses 1, a processor, and a memory. Control instructions are set in the memory, and the processor can perform operations based on the control instructions and transfer processed data to the AR glasses 1.

Alternatively, in embodiments, the solution in which the photovoltaic apparatus is used to recycle light and convert light into electric energy may also be used in a projector. Specifically, the photovoltaic apparatus is added to an optical receiver/transmitter of the projector, so that the photovoltaic apparatus recycles light that cannot be collected by a lens and converts the light into electric energy. This increases a service life of the projector.

The foregoing descriptions are merely preferred embodiments of this application, and are not intended to limit this application. For a person skilled in the art, various modifications and variations may be made to this application. Any modification, equivalent replacement, or improvement made without departing from the spirit and principle of this application shall fall within the protection scope of this application.

**Claims**

1. AR glasses, comprising a frame and an eyeglass, wherein the eyeglass is disposed on the frame, and the AR glasses further comprise:

   an optical receiver/transmitter, configured to emit light, wherein the optical receiver/transmitter is disposed on the frame;
   a light propagation medium, configured to guide propagation of the light emitted by the optical receiver/transmitter;
   a power supply apparatus, configured to provide electric energy for the AR glasses; and
   a photovoltaic apparatus, configured to absorb light that does not enter the light propagation medium, and convert light energy into electric energy, wherein the photovoltaic apparatus is electrically connected to the power supply apparatus, and the electric energy generated by the photovoltaic apparatus is transmitted to the power supply apparatus.

2. The AR glasses according to claim 1, wherein the light propagation medium comprises an in-coupling grating and an optical waveguide, the in-coupling grating is disposed between the optical receiver/transmitter and the optical waveguide, and the in-coupling grating is configured to change a direction of light, to enable the light to enter the optical waveguide; and
the photovoltaic apparatus can convert light energy that passes through the in-coupling grating and that does not enter the optical waveguide into electric energy.

3. The AR glasses according to claim 2, wherein the photovoltaic apparatus and the in-coupling grating are disposed oppositely.

4. The AR glasses according to any one of claims 1 to 3, wherein the photovoltaic apparatus comprises one or more of a silicon solar cell, an organic solar cell, a perovskite solar cell, a quantum dot solar cell, a cell obtained by connecting an organic solar cell and a silicon solar cell in series, a cell obtained by connecting a perovskite solar cell and a silicon solar cell in series, and a cell obtained by connecting a quantum dot solar cell and a silicon solar cell in series.

5. The AR glasses according to claim 1, wherein the optical receiver/transmitter comprises a lens and a light emitting screen, and the lens can converge light emitted by the light emitting screen to the light propagation medium; and
the photovoltaic apparatus can convert light energy that is not converged and emitted by the lens into electric energy.

6. The AR glasses according to claim 5, wherein the photovoltaic apparatus is disposed around a periphery of the light emitting screen and a periphery of the lens.

7. The AR glasses according to claim 6, wherein the optical receiver/transmitter further comprises a housing, the light emitting screen and the lens are disposed inside the housing, and the photovoltaic apparatus is disposed outside the housing; and
the housing is made of a transparent material, and light can enter the photovoltaic apparatus through the housing.

8. The AR glasses according to claim 7, wherein the photovoltaic apparatus is a flexible solar cell.

9. The AR glasses according to claim 8, wherein the flexible solar cell comprises one or more of an organic solar cell, a quantum dot solar cell, a perovskite solar cell, a cell obtained by connecting an organic solar cell and a quantum solar cell in series, a cell obtained by connecting an organic solar cell and a perovskite solar cell in series, and a cell obtained by connecting a quantum dot solar cell and a perovskite solar cell in series.

10. An AR glasses system, wherein the AR glasses system comprises the AR glasses according to any one of claims 1 to 9.

FIG. 1

FIG. 2

13

111

113

112

FIG. 3

113

13

112

FIG. 4

## INTERNATIONAL SEARCH REPORT

| International application No. |
| --- |
| **PCT/CN2023/080534** |

| A. | CLASSIFICATION OF SUBJECT MATTER |
| --- | --- |

G02B27/01(2006.01)i

According to International Patent Classification (IPC) or to both national classification and IPC

| B. | FIELDS SEARCHED |
| --- | --- |

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNTXT, ENTXTC: 增强现实, 虚拟现实, 头戴, 近眼, 光伏, 硅光, 太阳能, 利用, 效率, 回收, 光, AR, VR, HMD, solar, use, efficiency, recovery, recycle, light

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 110764260 A (HUAWEI TECHNOLOGIES CO., LTD.) 07 February 2020 (2020-02-07) description, paragraphs [0040]-[0056], and figures 1-2a | 1-10 |
| Y | CN 101995691 A (SHANGHAI TIANMA MICROELECTRONICS CO., LTD.) 30 March 2011 (2011-03-30) description, paragraph [0055] | 1-10 |
| A | CN 108364979 A (SHANGHAI HANLI ELECTRONIC TECHNOLOGY CO., LTD.) 03 August 2018 (2018-08-03) entire document | 1-10 |
| A | CN 111587392 A (MAGIC LEAP, INC.) 25 August 2020 (2020-08-25) entire document | 1-10 |
| A | CN 206946103 U (WANG ZHICHONG) 30 January 2018 (2018-01-30) entire document | 1-10 |
| A | CA 2316473 A1 (MANN, S.) 28 January 2001 (2001-01-28) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 June 2023** | **13 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/080534**

| Patent document cited in search report | | | Publication date (day/month/year) | Patent family member(s) | | | Publication date (day/month/year) |
|---|---|---|---|---|---|---|---|
| CN | 110764260 | A | 07 February 2020 | None | | | |
| CN | 101995691 | A | 30 March 2011 | None | | | |
| CN | 108364979 | A | 03 August 2018 | None | | | |
| CN | 111587392 | A | 25 August 2020 | EP | 3724712 | A1 | 21 October 2020 |
| | | | | JP | 2021505935 | A | 18 February 2021 |
| | | | | JP | 7225233 | B2 | 20 February 2023 |
| | | | | CA | 3083105 | A1 | 20 June 2019 |
| | | | | US | 2019179149 | A1 | 13 June 2019 |
| | | | | US | 11256093 | B2 | 22 February 2022 |
| | | | | AU | 2018383595 | A1 | 11 June 2020 |
| | | | | WO | 2019118357 | A1 | 20 June 2019 |
| | | | | KR | 20200095509 | A | 10 August 2020 |
| | | | | IL | 274907 | A | 30 July 2020 |
| | | | | US | 2022206301 | A1 | 30 June 2022 |
| CN | 206946103 | U | 30 January 2018 | None | | | |
| CA | 2316473 | A1 | 28 January 2001 | None | | | |

Form PCT/ISA/210 (patent family annex) (July 2022)

**REFERENCES CITED IN THE DESCRIPTION**

**Patent documents cited in the description**

- CN 202210554304